# EUROPEAN PATENT APPLICATION

(11) **EP 3 156 202 A1**
(43) Date of publication of application: **19.04.2017**
(21) Application number: 15189894.7
(22) Date of filing: 15.10.2015
(51) Int. Cl.: B28B 11/04, C04B 28/02, B05B 3/10

(54) **CONCRETE TILES**

(71) Applicant: Etex Holding GmbH, 69126 Heidelberg (DE)
(72) Inventor: SCHACHINGER, Ingo, 86633 Neuburg an der Donau (DE)
(74) Representative: Van Steenlandt, Wim August Maria

(57) **Abstract**

A method to provide a concrete tile is provided, which method comprising the steps of
o Providing a concrete tile body;
o Coating at least one surface of said concrete tile body with a cementitious coating layer, by applying a cementitious slurry to the body by means of a rotating disc application device;
o Drying and hardening of the coated concrete tile.

## Description

### Field of the invention

This invention relates to concrete tiles and methods to provide such concrete tiles

### Background of the invention

Concrete tiles are well known in the art

In general, concrete tiles show a more rough and uneven surface as compared to clay tiles. It is known to provide concrete tiles with coatings to compensate the roughness of the concrete and to provide a more even and smooth surface. As an example, a polymer layer is glued to the concrete body of the tile, as disclosed in WO0046463.

It is known to use a double extrusion process to provide concrete tiles, such as in GB2248578.

### Summary of the invention

According to a first aspect of the invention, methods to provide a concrete tile are provided, these methods comprising the steps of
o Providing a concrete tile body;
o Coating at least one surface of said concrete tile body with a cementitious coating layer, by applying a cementitious slurry to the body by means of a rotating disc application device;
o Drying and hardening of the coated concrete tile.

According to some embodiments, the cementitious slurry may be a polymer modified concrete slurry.

According to some embodiments, the polymer modified concrete slurry may comprise o A cementitious binder in the range of 30 to 60 %w;
o Polymer components in the range of 1 to 20 %w;
o Water in the range of 20 to 35 %w;
o Fly ash, typically in the range of 0 to 20 %w.

According to some embodiments, the polymer modified concrete slurry may comprise cementitious binder, such as OPC, in the range of 40 to 50 %w.

According to some embodiments, the polymer modified concrete slurry may comprise polymer components in the range of 3 to 9 %w.

According to some embodiments, the polymer modified concrete slurry may comprise acrylic polymer as polymer components.

According to some embodiments, the polymer modified concrete slurry may comprise water in the range of 25 to 30 %w.

According to some embodiments, the polymer modified concrete slurry may comprise fly ash, typically in the range of 5 to 15 %w.

According to some embodiments, the polymer modified concrete slurry may comprise additives selected from the group consisting of defoamers, flow adjusting modifiers, pigments, fillers, efflorescence inhibitors, rheology modifiers, wetting agents and dispersing agents . According to some embodiments, the polymer modified concrete slurry may comprise such additives in an amount of 0 to 20%w, more preferred in the range of 5 to 15%w. Most preferred, these additives comprises pigments and/or fillers.

In the above, the %w is expressed over the total weight of the polymer modified concrete slurry.

The polymer modified concrete is also referred to as PMC.

According to some embodiments, the cementitious slurry may be applied in a range of 700 to 900 g/m² of coated surface.

More preferred, the cementitious slurry, such as a polymer modified concrete slurry, is applied in the range of 780 to 820 g/m².

Using a rotating disc application device, the thickness of the layer of the cementitious slurry , such as a PMC slurry can be kept low. A thickness of about 250 to 550 µm can be obtained, such as a thickness in the range of 250 to 400 µm.

According to some embodiments, the rotating disc application device may comprise at least a first set of rotating discs, a first angle being the angle from the tile vector to the rotating disc axis vector of this first set of rotating discs, said first angle is in the range of 20 to 60°, wherein the tile vector is the vector from the head of the tile to the bullnose of the tile, the rotating disc axis vector is the vector along the axis of rotation, its direction pointing towards the end of said axis.

The direction pointing towards the end of said axis of the vector along the axis of rotation means the direction from the side of the axis where the device for rotating said is present, towards the side of the axis where the rotating discs are present.

The concrete tile bodies move through the rotating disc application device in a given direction by means of a transporting means, such as a set of transport rollers, a chain belt or alike. The concrete tile bodies are moving substantially horizontally. The tile may be transported with its bullnose tailing or leading in moving direction. In both situations, the angle between the tile vector and the rotating disc axis vector cause the droplets of polymer modified concrete to coat well the bullnose along its curvature.

According to some embodiments, the tiles may move through the rotating disc application device one after the other, the distance between the head of the first tile and bullnose of the second tile of two subsequent tiles is at least equal to the height of the head of said tiles, multiplied by the tangent of said first angle.

As such, the bullnose will be coated with cementitious slurry, e.g. PMC slurry to a large extent if not completely.

According to some embodiments, the rotating disc application device may comprise at least a second set of rotating discs, a second angle being the angle from the tile vector to the rotating disc axis vector of this second set of rotating discs, said second angle is in the range of 20 to 60°, wherein the tile vector is the vector from the head of the tile to the bullnose of the tile, the rotating disc axis vector is the vector along the axis of rotation, its direction pointing towards the end of said axis.

More preferred, the first and/or second angle is chosen in the range of 40 to 60°, such as 45°.

Most preferably, the first and second angle are substantially identical.

According to some embodiments, the tile may move through the rotating disc application device according to a plane defined by the direction of transportation and a second direction perpendicular to this direction of transportation, the first and second set of rotating discs are at the same position in view of the direction of transportation.

According to some embodiments, the tile may move through the rotating disc application device according to a plane defined by the direction of transportation and a second direction perpendicular to this direction of transportation, the first and second set of rotating discs are at a different position in view of the direction of transportation.

The first and second set of rotating discs being at a different position in view of the direction of transportation means that, along the direction of transportation, the first and second set of rotating discs are present at the same position along this direction.

According to some embodiments, the first and second set of rotating discs may be at a different position in view of the second direction of said plane.

The first and second set of rotating discs being at a different position in view of the second direction of this plane means that, along this direction of the plane, the first and second set of rotating discs are present at a different position along this direction.

More preferred, the first and second set of rotating discs are adjacent one to the other versus this second direction. Most preferred, the first and second set of rotating discs are equidistant from the central line of the tile bodies moving through the rotating disc application device. The central line means the imaginary line separating the tile in two equally wide parts in direction according to the tile vector.

Positioning the first and second set of rotating discs offset this line in opposite direction, cause that the cementitious, e.g. PMC, coating will show less or no shadow effects due to undulations present in the tile surface. Shadow effect means that at some surface regions of the tile surface, the coating is prevented to be projected to by the rotating discs, because of higher or lower parts of the surface which are present adjacent to this less coated surface regions. According to some embodiments, the direction of rotation of the first set of rotating discs may be opposite to the direction of rotation of the second set of rotating discs .

More preferred, the set of rotating discs rotate outwards the rotating disc application device, i.e. from the inner of the device towards the outer side of the device.

The provision of oppositely rotating discs, in particularly in combination with sets of rotating discs being adjacent one to the other versus this second direction, reduces possible shadow effects.

According to some embodiments, the rotating disc application device may comprise at least a third set of rotating discs, a third angle being the angle from the tile vector to the rotating disc axis vector of this third set of rotating discs, said third angle is in the range of is in the range of 0 to 10°.

According to some embodiments, the rotating disc application device may comprise at least a fourth set of rotating discs, a fourth angle being the angle from the tile vector to the rotating disc axis vector of this fourth set of rotating discs, said fourth angle is in the range of is in the range of 0 to 10°.

More preferred, the third and/or fourth angle is chosen in the range of 0 to 5, such as substantially 0°. In the latter situation, the direction of proceeding of the concrete tile body through the rotating disc application device and the axis of rotation of this first set of rotating discs are substantially parallel.

Most preferred, the third and fourth angle are substantially identical.

According to some embodiments, the third and fourth angle may also be chosen between 90 and 180°, preferably between 120 and 160°. With this provision, the head of the tiles can also be coated with cementitious slurry, such as PMC slurry, to a large extent if not completely.

According to some embodiments, the tile may move through the rotating disc application device according to a plane defined by the direction of transportation and a second direction perpendicular to this direction of transportation, the third and fourth set of rotating discs are at the same position in view of the direction of transportation.

According to some embodiments, the tile may move through the rotating disc application device according to a plane defined by the direction of transportation and a second direction perpendicular to this direction of transportation, the third and fourth set of rotating discs are at a different position in view of the direction of transportation.

According to some embodiments, the third and fourth set of rotating discs may be at a different position in view of the second direction of said plane.

More preferred, the third and fourth set of rotating discs are adjacent one to the other versus this second direction. Most preferred, the third and fourth set of rotating discs are equidistant from the central line of the tile bodies moving through the rotating disc application device. The central line means the imaginary line separating the tile in two equally wide parts in direction according to the tile vector.

Positioning the third and fourth set of rotating discs offset this line in opposite direction, cause that the cementitious coating, e.g. a PMC coating, will show less or even no shadow effects due to undulations present in the tile surface.

According to some embodiments, the direction of rotation of the third set of rotating discs may be opposite to the direction of rotation of the fourth set of rotating discs.

Also for this third and fourth set, more preferably the set of rotating discs rotate outwards the rotating disc application device, i.e. from the inner of the device towards the outer side of the device.

The provision of oppositely rotating discs, in particularly in combination with sets of rotating discs being adjacent one to the other versus this second direction, reduces possible shadow effects.

According to some embodiments, the minimum distance D between the tiles and the rotating discs of a set of rotating discs, during operation of the set of rotating discs, may preferably be between 400 and 800 mm, such as between 440mm and 600mm.

According to a second aspect of the invention, a concrete tile is provided using a method according to the first aspect of the invention.

The concrete tiles obtainable and obtained according to this method, and in general the concrete tiles according to the first aspect of this invention, have a smooth surface where the tile is coated with a limited amount of the cementitious coating, such as PMC coating. They show good frost and rain/heat resistance, and show little to no moss growth.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematically view of a concrete tile according to the invention
Fig. 2 and 3 are schematically views of a process to provide concrete tile according to the invention.

The same reference signs refer to the same, similar or analogous elements in the different figures.

### Description of illustrative embodiments

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

Unless otherwise expressed, reference to %w is expressed over the total weight of the component in the liquid or solid material in which it is present.

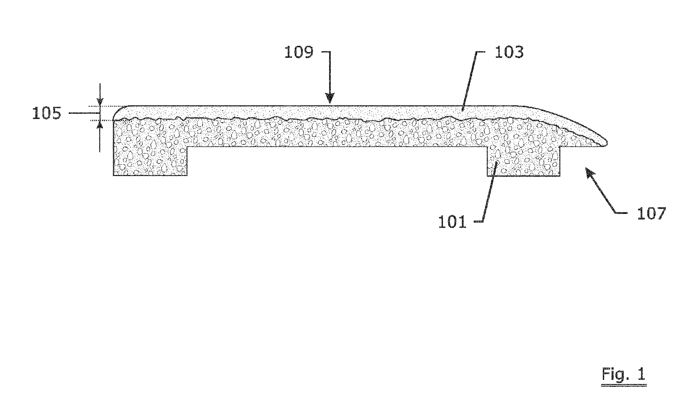

Figure 1 shows a schematically view of a cross section of a concrete tile 100 according to the invention. A concrete body 101 is coated with a layer of polymer modified concrete 103. This layer has an average thickness 105 of about 350 to 500 µm and a weight of 780 g/m² of coated surface. The layer 103 extends to the bullnose 107 of the tile 100 and provides a smooth surface 109 to the tile 100.

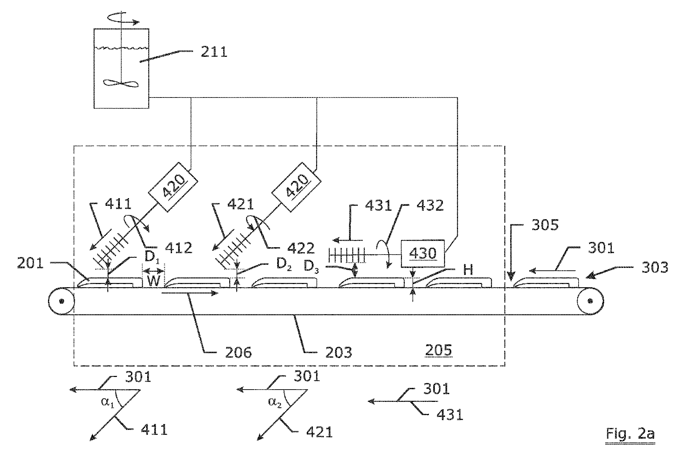

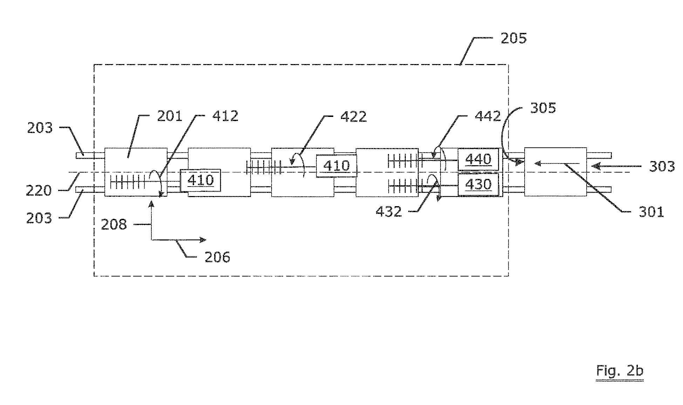

Figure 2a shows a schematically side view of a process to provide such tile 100, whereas figure 2b shows schematically the top view of this process.

A concrete tile body 201 is carried by a transport means 203, such as a set of rollers or transport belts, and passes a rotating disc application device 205 in a transport direction 206. The tile 201 passes with its bullnose 305 tailing in the direction of transportation 206.

A polymer modified concrete coating layer is applied by the four rotating disc stations or sets of rotating discs 410, 420, 430 and 440, which jets droplets of a polymer modified concrete slurry 211 to the surface of the concrete tile body passing the device 205.

The concrete tile bodies 201 have a head 303 where the tile ahs a thickness H, and a bullnose 305. The tile vector 301 is the vector from the head 303 of the tile to the bullnose 305 of the tile. Each of the sets of rotating discs has a rotating disc axis vector (411, 421, 431, 441) which is the vector along the axis of rotation of the set of discs, the vectors direction pointing towards the end of said axis. For the first set of rotating discs 410, a first angle α1 is the angle from the tile vector to the rotating disc axis vector of this first set of rotating discs. This first angle α1 is about 45°. For the second set of rotating discs 420, a second angle α2 is the angle from the tile vector to the rotating disc axis vector of this second set of rotating discs. This second angle α2 is also about 45°.

For the third and fourth sets of rotating discs 430 and 440, a third and fourth angles α3 and α4 are the angle from the tile vector to the rotating disc axis vector of this third and fourth set of rotating discs. These third and fourth angles α3 and α4 are about 0°.

When operational, the distance W between the head 303 of a first tile and the bullnose of a subsequent tile is at least equal to H * tg(α1). As α1 and α2 are 45° about, this tangent equals 1.

The minimum distance D between the tiles and the rotating discs of the set of rotating discs 410, 420 and 430 is preferably between 400 and 800 mm, such as between 440mm and 600mm. As an example, the distance D1 and D2 between the rotating discs of the sets of rotating discs 410 and 420 is about 450mm, while the distance D3 between the rotating discs of the set of rotating discs 430 is about 580mm.

The tile moves through the rotating disc application device according to a plane defined by the direction of transportation 206 and a second direction 208 perpendicular to this direction of transportation. The first and second set of rotating discs (410 respectively 420) are at a different position in view of the direction of transportation. The third and fourth set of rotating discs (430 respectively 440) are at the same position in view of the direction of transportation. They are "side by side" positioned in view of the second direction 208.

The first and second set of rotating discs (410 and 420) are at a different position in view of the second direction 208 of the plane. They are adjacent one to the other versus this second direction. The first and second set of rotating discs are equidistant from the central line 220 of the tile bodies 201 moving through the rotating disc application device 205.

In an identical way, the third and fourth set of rotating discs (430 and 440) are at a different position in view of the second direction 208 of the plane. The third and fourth set of rotating discs are equidistant from the central line 220 of the tile bodies 201 moving through the rotating disc application device 205.

The first to fourth angle of the sets of rotating discs may be provided such that the angles are adjustable, depended on the type of tile to be coated, and the distance W between subsequent tiles.

The direction or rotation 412 and 432 of the first and third set of rotating discs is opposite to the direction 422 and 442 of rotation of the second and fourth set of rotating discs. In each case, the directions of rotation are outward the device 205.

The polymer modified concrete slurry 211 used, comprises
- OPC and fly ash (about 55 %w, about 43% being OPC);
- Polymer Slurry with a solid-content of 55 to 60 %w based upon the total weight of the polymer slurry. This Polymer slurry has as components mainly acrylic, fillers and color pigments; the amount of dry binder, mainly or completely being acrylic binder, is about 5 to 6%w; the amount of pigments and fillers and alike, is about 12 to 14%w
- Water (about 25 to 27 %w)
- A small amount of defoamers, flow adjusting modifiers,

The PMC slurry is applied in an amount of 110 ± 10 g/tile. Once the concrete tile is cured, this PMC coating is present in an amount of 100 g and has an average thickness of about 300 to 400 µm.

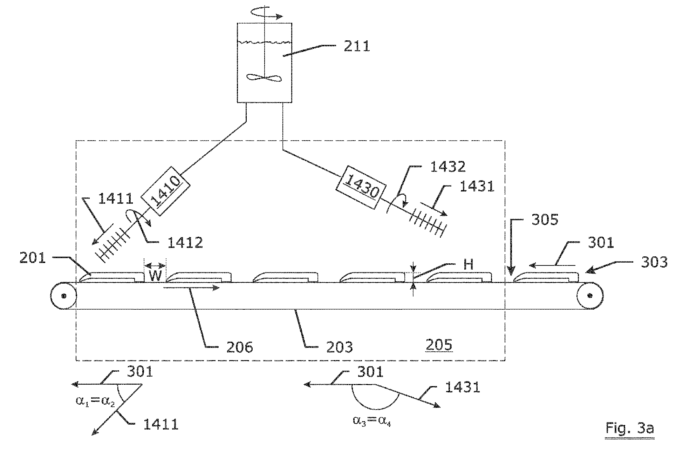

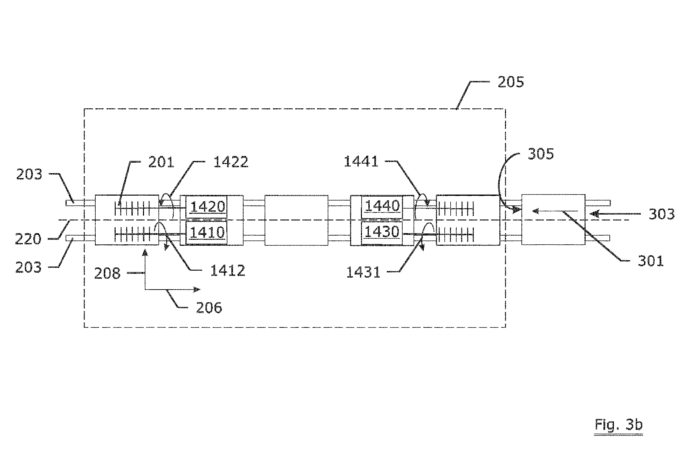

Figure 3a shows a schematically side view of an alternative process to provide such tile 100, whereas figure 3b shows schematically the top view of this process.

Again a concrete tile body 201 is carried by a transport means 203, such as a set of rollers or transport belts, and passes a rotating disc application device 205 in a transport direction 206. The tile 201 passes with its bullnose 305 tailing in the direction of transportation 206.

A polymer modified concrete coating layer is applied by the four rotating disc stations or sets of rotating discs 1410, 1420, 1430 and 1440, which jets droplets of a polymer modified concrete slurry 211 to the surface of the concrete tile body passing the device 205.

The concrete tile bodies 201 have a head 303 where the tile ahs a thickness H, and a bullnose 305. The tile vector 301 is the vector from the head 303 of the tile to the bullnose 305 of the tile. Each of the sets of rotating discs has a rotating disc axis vector (1411, 1421, 1431, 1441) which is the vector along the axis of rotation of the set of discs, the vectors direction pointing towards the end of said axis.

For the first set of rotating discs 1410, a first angle α1 is the angle from the tile vector to the rotating disc axis vector of this first set of rotating discs. This first angle α1 is about 45°. For the second set of rotating discs 1420, a second angle α2 is the angle from the tile vector to the rotating disc axis vector of this second set of rotating discs. This second angle α2 is also about 45°.

For the third and fourth sets of rotating discs 1430 and 1440, a third and fourth angles α3 and α4 are the angle from the tile vector to the rotating disc axis vector of this third and fourth set of rotating discs. These third and fourth angles α3 and α4 are about 170°.

When operational, the distance W between the head 303 of a first tile and the bullnose of a subsequent tile is at least equal to H*tg(α1). As α1 and α2 are 45° about, this tangent equals 1.

The tile moves through the rotating disc application device according to a plane defined by the direction of transportation 1206 and a second direction 1208 perpendicular to this direction of transportation. The first and second set of rotating discs (1410 respectively 1420) are at a identical position in view of the direction of transportation. The third and fourth set of rotating discs (1430 respectively 1440) are at the same position in view of the direction of transportation.

The first and second set of rotating discs (1410 and 1420) are at a different position in view of the second direction 1208 of the plane. They are adjacent one to the other versus this second direction. The first and second set of rotating discs are equidistant from the central line 220 of the tile bodies 201 moving through the rotating disc application device 205.

In an identical way, the third and fourth set of rotating discs (1430 and 1440) are at a different position in view of the second direction 208 of the plane. The third and fourth set of rotating discs are equidistant from the central line 220 of the tile bodies 201 moving through the rotating disc application device 205.

The direction or rotation 1412 and 1432 of the first and third set of rotating discs is opposite to the direction 1422 and 1442 of rotation of the second and fourth set of rotating discs. In each case, the directions of rotation are outward the device 205.

It is to be understood that although preferred embodiments and/or materials have been discussed for providing embodiments according to the present invention, various modifications or changes may be made without departing from the scope and spirit of this invention.

## Claims

1. A method to provide a concrete tile, comprising the steps of
o Providing a concrete tile body;
o Coating at least one surface of said concrete tile body with a cementitious coating layer, by applying a cementitious slurry to the body by means of a rotating disc application device;
o Drying and hardening of the coated concrete tile.

2. A method according to claim 1, wherein the cementitious slurry is a polymer modified concrete slurry.

3. A method according to claim 2 wherein the polymer modified concrete slurry comprises
o A cementitious binder in the range of 30 to 60 %w;
o Polymer components, in the range of 1 to 20 %w;
o Water in the range of 20 to 35 %w;
o Fly ash, typically in the range of 0 to 20 %w.

4. A method according to any of the claims 1 to 3, wherein the cementitious slurry is applied in a range of 700 to 900 g/m² of coated surface.

5. A method according to any of the claims 1 to 4, wherein the rotating disc application device comprises at least a first set of rotating discs, a first angle being the angle from the tile vector to the rotating disc axis vector of this first set of rotating discs, said first angle is in the range of 20 to 60°, wherein the tile vector is the vector from the head of the tile to the bullnose of the tile, the rotating disc axis vector is the vector along the axis of rotation, its direction pointing towards the end of said axis.

6. A method according to claim 5, wherein tiles move through the rotating disc application device one after the other, the distance between the head of the first tile and bullnose of the second tile of two subsequent tiles is at least equal to the height of the head of said tiles, multiplied by the tangent of said first angle.

7. A method according to any one of the claims 5 to 6, wherein the rotating disc application device comprises at least a second set of rotating discs, a second angle being the angle from the tile vector to the rotating disc axis vector of this second set of rotating discs, said second angle is in the range of 20 to 60°, wherein the tile vector is the vector from the head of the tile to the bullnose of the tile, the rotating disc axis vector is the vector along the axis of rotation, its direction pointing towards the end of said axis.

8. A method according to claim 7, wherein the tile moves through the rotating disc application device according to a plane defined by the direction of transportation and a second direction perpendicular to this direction of transportation, the first and second set of rotating discs are at the same position in view of the direction of transportation.

9. A method according to claim 7, wherein the tile moves through the rotating disc application device according to a plane defined by the direction of transportation and a second direction perpendicular to this direction of transportation, the first and second set of rotating discs are at a different position in view of the direction of transportation.

10. A method according to any one of the claims 7 to 9, wherein the first and second set of rotating discs are at a different position in view of the second direction of said plane.

11. A method according to any one of the claims 7 to 10, wherein the direction of rotation of the first set of rotating discs is opposite to the direction of rotation of the second set of rotating discs .

12. A method according to any of the claims 1 to 11, wherein the rotating disc application device comprises at least a third set of rotating discs, a third angle being the angle from the tile vector to the rotating disc axis vector of this third set of rotating discs, said third angle is in the range of is in the range of 0 to 10°.

13. A method according to claim 12 , wherein the rotating disc application device comprises at least a fourth set of rotating discs, a fourth angle being the angle from the tile vector to the rotating disc axis vector of this fourth set of rotating discs, said fourth angle is in the range of is in the range of 0 to 10°.

14. A method according to claim 13, wherein the tile moves through the rotating disc application device according to a plane defined by the direction of transportation and a second direction perpendicular to this direction of transportation, the third and fourth set of rotating discs are at the same position in view of the direction of transportation.

15. A method according to claim 13, wherein the tile moves through the rotating disc application device according to a plane defined by the direction of transportation and a second direction perpendicular to this direction of transportation, the third and fourth set of rotating discs are at a different position in view of the direction of transportation.

16. A method according to any one of the claims 13 to 15, wherein the third and fourth set of rotating discs are at a different position in view of the second direction of said plane.

17. A method according to any one of the claims 13 to 16, wherein the direction of rotation of the third set of rotating discs is opposite to the direction of rotation of the fourth set of rotating discs.
